# EUROPEAN PATENT SPECIFICATION

(11) **EP 1 213 910 B1**
(45) Date of publication and mention of the grant of the patent: **13.10.2004**
(21) Application number: 01309992.4
(22) Date of filing: 29.11.2001
(51) Int. Cl.: H04N 1/00, H04L 29/06

(54) **Digital image distribution system, apparatus and method**
Verfahren, System und Gerät für die Verteilung von digitalen Bildern
Appareil, methode et système de traitement et de distribution d'images numeriques

(30) Priority: 30.11.2000 JP 2000365490
(43) Date of publication of application: 12.06.2002
(73) Proprietor: Sanyo Electric Co., Ltd., Moriguchi-shi, Osaka (JP)
(72) Inventor: Hirata, Hiroyuki, Ora-gun, Gunma (JP); Yagi, Hironori, Tokyo (JP); Okumura, Takashi, Kawaguchi-shi, Saitama (JP)
(74) Representative: Cross, Rupert Edward Blount

(56) References cited:
- EP-A- 0 844 781
- EP-A- 0 860 980
- WO-A-00/30338
- "CONSUMER IMAGE SYSTEM" IBM TECHNICAL DISCLOSURE BULLETIN, IBM CORP. NEW YORK, US, vol. 36, no. 8, 1 August 1993 (1993-08-01), page 151 XP000390174 ISSN: 0018-8689
- DAL DEGANN N ET AL: "STILL IMAGES RETRIEVAL FROM A REMOTE DATABASE: THE SYSTEM IMAGINE" SIGNAL PROCESSING. IMAGE COMMUNICATION, ELSEVIER SCIENCE PUBLISHERS, AMSTERDAM, NL, vol. 5, no. 3, 1 May 1993 (1993-05-01), pages 219-234, XP000367170 ISSN: 0923-5965

## Description

### BACKGROUND OF THE INVENTION

### Field of the Invention

The present invention relates to a data distribution system, a data distribution apparatus and a data distribution method, and in particular to a technique for distributing image data or the like to a user connected to a network.

### Description of Related Art

Against the background of recent developments in the Internet and related technologies, have been seen a huge number of proposals for services providing users with various data via the Internet. For example, image data, music data, or the like are distributed to a user's client terminal from a server computer via the Internet. In another example, when a user produces a silver salt photograph of an image captured using an optical camera, that image can be scanned and the digital image can be stored on a server computer connected to the Internet. In another example, a user can transmit an image captured by a digital camera via the Internet to a service center, which can then produce hardcopies of the image and mail these back to the user.

A service for printing an image captured using a digital camera by a user and transmitted to a predetermined service center via the Internet is advantageous in that a user need not purchase their own expensive printer. On the other hand, this service is troublesome in that the user must own an expensive digital camera for capturing an image and always carry the digital camera so as to obtain desired images. Further, in order to transmit the images captured by the digital camera to a predetermined service center, the user must input the image captured by the digital camera into his own terminal, such as a personal computer, which must be connected to the Internet for transmitting the image data. This requires not inconsiderable knowledge and equipment. Especially, as the popularity of digital cameras has increased, they have come to be used by people of wide demographics, such that the demand that image data be available in a visible manner has increased.

EP-A-0844781 discloses an image server in which digital images from digital cameras are stored, which can then be downloaded to a user terminal PC.

### SUMMARY OF THE INVENTION

The present invention, is defined in Claims 1, 9 and 15. A user borrows a device such as a digital camera and, when the user returns the device after capturing desired data, the data stored in the device is input and stored on a server computer (a server) in association with a unique address. This enables the user to easily obtain the data he captured using the address.

The address may, for example, be provided with the device in a form which is visible to the user, so that the user can obtain the address, at least when they return the device, and after returning the device can obtain the data they captured from the server using that address.

The address is, prestored in a memory of the device, and may be input along with the data captured by the user to be further stored in the server computer. This can further reduce time and labor at the shop to which the device is returned, and can also ensure that the address is reliably provided to the server. The memory may be a ROM or a RAM.

The address may, for example, be generated from information associated with the user. This helps the user to recognize or remember the address.

According to the present invention, the address may, for example, be a HTTP URL. A unique web page on which the data captured by the user is published can be specified by the URL, such that the user can easily access their data.

Moreover, according to the present invention, at least one of a computer, a portable telephone, and a digital television may be used as the user's terminal.

Further, according to the present invention, the data may one or both of image and voice data. Image data may be still or a motion image data.

The device borrowed and returned by the user may be, for example, a digital camera.

### BRIEF DESCRIPTION OF THE DRAWINGS

These and other objects of the invention will be explained in the description below, in connection with the accompanying drawings, in which:
FIG. 1 is a conceptual view showing a system according to an embodiment of the present invention;
FIG. 2 is a block diagram showing the structure of a shop 12 shown in Fig. 1;
FIG. 3 is a view for explaining a transmission data format according to the embodiment;
FIG. 4 is a view showing the structure of a digital camera 17;
FIG. 5 a view for explaining an URL stored in a flash memory of a digital camera;
FIG. 6 is a view for explaining another URL stored in a flash memory of a digital camera;
FIG. 7 is a block diagram showing the structure of a server 14 shown in FIG. 1;
FIG. 8 is a structural view of a data storing section shown in FIG. 7;
FIG. 9 is a flowchart of a whole process operation according to the embodiment of the present invention;
FIG. 10 is a view for explaining the screen display of a user terminal according to the embodiment of the present invention; and
FIG. 11 is a view for explaining another screen display of a user terminal according to the embodiment of the present invention.

### DETAILED DESCRIPTION OF THE PREFERRED EMBODIMENT

A preferred embodiment of the present invention will be described in further detail with reference to the accompanying drawings.

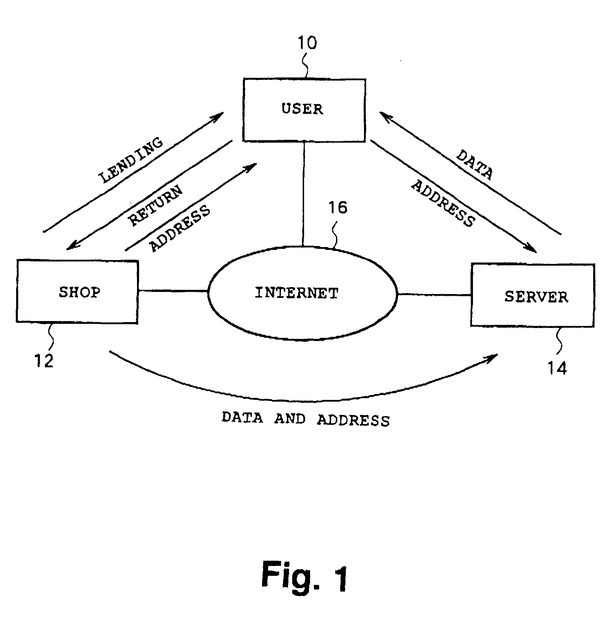

Referring to Fig. 1, a conceptual view of a system according to an embodiment of the present invention is illustrated. In Fig. 1, a user 10, a shop 12, and a server 14 are interconnected via the Internet 16. The user 10 borrows a desired device, such as a digital camera, from the shop 12 and captures desired image or voice data. Such data capturing may be by the user's capturing of an image of a person or a scene at indoor or outdoor sites, such as a theme park, an amusement park, a business exhibition place or a town, or recording human speech or other sound. More specifically, the user may, for example, capture a souvenir photograph at a theme park or with a friend visiting town, or may capture scenes of a mountain while on vacation or images of an exhibition attended on a business trip. After capturing the desired data, the user 10 returns the device to the shop 12. At the shop 12, which may, for example, be a convenience store, the data captured by the user 10 is read from the returned device and the user 10 is provided with an address which will allow the user 10 to acquire the captured data via the Internet 16. When the data captured by the user is, for example, provided in the form of a web page, the address can be an HTTP (Hyper Text Transfer Protocol) URL (Uniform Resource Locator). Specific examples of methods for assigning an address are described below.

After the data captured by the user is read from the device at the shop 12, the data is then transmitted to the server 14 via the Internet 16 along with the address provided to the user 10. The data transmitted from the shop 12 is stored in the server 14 in association with the address. For example, when displaying the data on a web page written in HTML (Hyper Text Markup Language), the URL of the web page may correspond to the address provided at the shop 12.

In this manner, the data captured by the device which the user borrowed from the shop is stored on the server 14 and an address for accessing the data is provided. Accordingly, it is possible for the user 10 to access the data captured by himself using the address and thereby obtain the captured data via the Internet when desired.

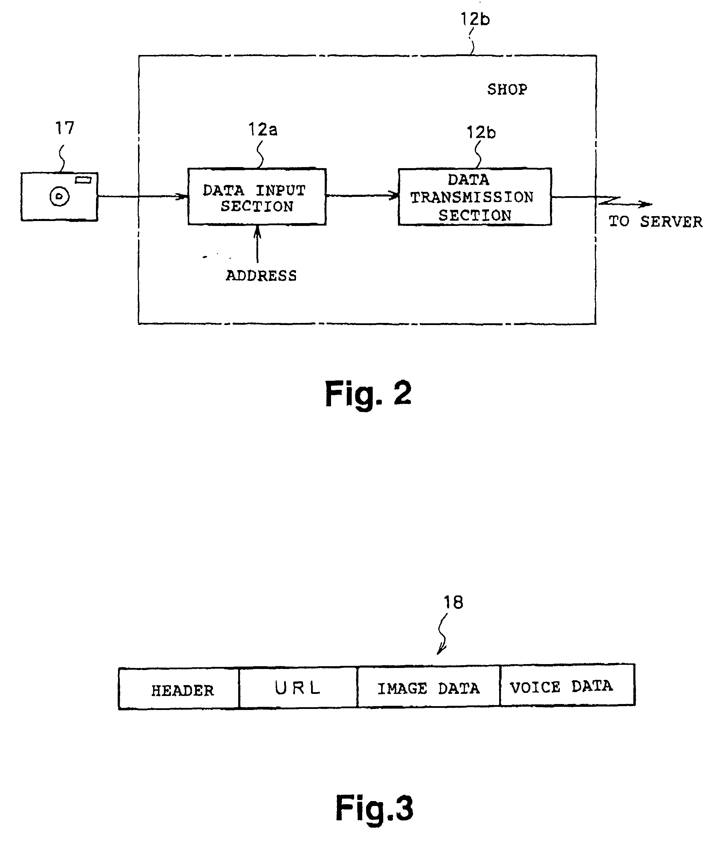

Fig. 2 is a block diagram showing the structure of the shop 12 in Fig. 1. The image data captured by the user or the voice data input by the user is stored in a memory of the device, for example a digital camera 17, which the user 10 returns to the shop 12. The image or voice data is then read from the memory of the digital camera 17 and input to a data input section 12a provided at the shop 12. This data transfer may be performed through wireless communication using radio or infrared signals, or through wired communication using a data line or a connector. In wired communication, in order to prevent the user's captured data from being transferred to general devices such as computers, it may be preferable to use a data line or a connector having a unique configuration that is not interchangeable with the standard connectors of such devices. In wireless communication, it may be desirable to transfer data using a proprietary transmission method, or to transfer scrambled data. The data transfer from the digital camera 17 at the shop 12 may be initiated by starting a transfer program upon detection of external factors, such as an external radio signal sent to the digital camera 17, mechanical insertion of a pin into the digital camera 17, or the like. The image or voice data thus transferred to the data input section 12a is then read and transmitted to a data transmission section 12b, which further transmits the data to the server 14 via the Internet 16. On the other hand, the uniquely assigned address is also input to the data input section 12a, and is further transmitted to the server 14 through the data transmission section 12b. The address is previously provided in the device returned from the user 10. The data input section 12a and the data transmission section 12b are controlled by a control section, such as a CPU of a personal computer which is not shown. Reading and inputting of the data from the digital camera 17, data transfer to the data transmission section 12b, and further data transfer from the data transmission section 12b to the network is controlled by instructions from the CPU and these processes are sequentially executed in synchronization. In the data input section 12a, the input data is temporarily stored in a memory (not shown) and a URL for the user is then added to the data under the control of the CPU. This URL enables the user to access to the server 14 as described in greater detail later in this specification. In the case of data transfer through the Internet, the data transmission section 12b transmits data in packet units indicating the address of the server 14 which is the destination of the data transmission.

Fig. 3 illustrates an example format for data to be transmitted from the data transmission section 12b to the server 14 via the Internet 16. The data 18 to be transmitted comprises a header portion, a uniquely assigned address (shown as a URL in Fig. 3), image data, and voice data. By receiving data in such a format, the server 14 is capable of storing the image and voice data captured by the user in association with the URL.

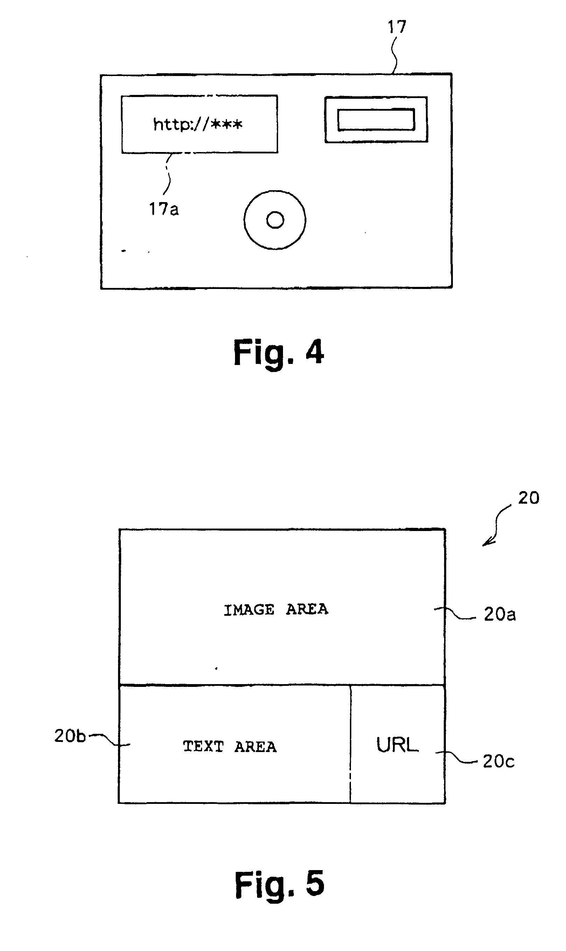

The uniquely assigned address can be previously provided in the device to be returned from the user 10, as described above. Fig. 4 illustrates the structure of a digital camera 17 as one example of a device which the user borrows and then returns. Unlike a commercially available digital camera, the digital camera 17 described herein may have limited functions. For example, a battery used as a power source of the digital camera 17 may not be interchangeable with commercially available batteries, and a connection terminal as required in a general personal computer for inputting the data stored in a memory (a flash memory) is not necessary for the digital camera 17. Further, the number of images that can be captured or the photographing resolution can be limited in accordance with the rental fee. It is also possible to provide a timer in the digital camera 17 and to start the timer when the user borrows the camera 17, so that the photographing operation can be limited within a fixed time period to promote prompt return to the shop. In addition, to encourage return of devices and improve their return ratio, the refund amount may be tied to the number of images captured or an amount of data captured. A sticker 17a having an address (a URL is shown as an example in Fig. 4) indicated thereon may be attached onto a predetermined portion of the digital camera 17. When the user 10 returns the digital camera 17 to the shop 12, this sticker 17a is removed from the digital camera 17 and given to the user 10, so that the user 10 can know the address for their data. This sticker 17a is not necessarily put on the body of the digital camera, but may be provided in a package for the digital camera, for example. In such a case, the user 10 can recognize the address only after borrowing the digital camera 17 and opening the package prior to use. Data indicating the address indicated on the sticker 17a is pre-stored in the memory (such as a flash memory) of the digital camera 17, and this address data is read and input into the data input section 12a when reading the image or voice data stored in the flash memory of the digital camera 17.

Referring to Fig. 5, an example of the structure of a flash memory 20 of the digital camera 17 is shown when the address data is stored therein. The flash memory 20 includes an image area 20a for storing image data (voice data) and a text area 20b for storing text data. An address area 20c is further provided in a portion of the text area 20b for storing the address data such as a URL.

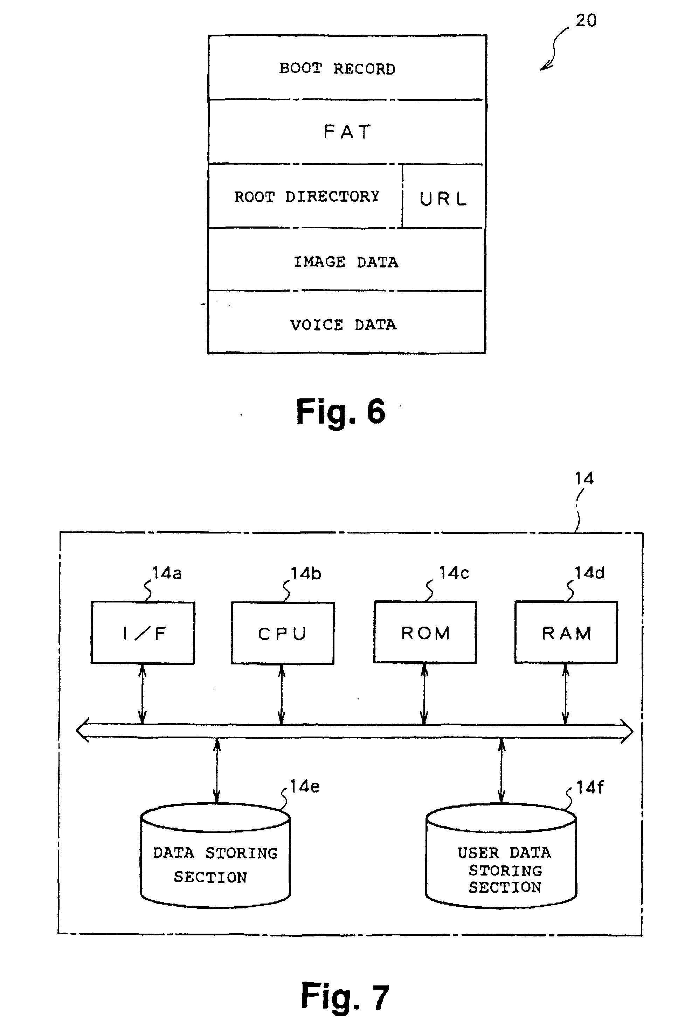

When the flash memory 20 of the digital camera 17 is divided into a boot record region, a FAT (file allocation table) region, a root directory region, an image data region, and a voice data region as shown in Fig. 6, it is possible to store the URL data in the root directory region, for example, so as to store the address data while securing the memory capacity of the image data region and the voice data region. The data arrangement in the flash memory 20 of the digital camera 17 is not limited to those shown in Figs. 5 and 6, and other arrangement may be used. The address data is stored in the flash memory 20 when the camera is borrowed or returned by the user 10. Then it is preferable that the address data be generated based on the information associated with the user 10. A POS terminal installed in the shop 12 may be used as address generating means. So as to generate the address data based on the information inherent to the user 10, for example, the address data may be generated based on the user's home telephone number or the number of a mobile telephone carried by the user. In such a case, the address data may be www.service.sanyo.com/(telephone number) or the like.

It should be noted that the address data is not limited to URL addresses themselves, and any data which corresponds uniquely to the URL can also be used as the address data. For example, it is possible that a certain ID is assigned to the user 10 and a URL corresponding to this ID on one-to-one basis is generated at the shop 12 and sent to the server 14 along with the user's ID. The user 10 can first access a service providing a web page in order to acquire a URL using the ID and can then use the URL provided by this service to access the data captured by the user.

Fig. 7 illustrates the structure of the server 14 shown in Fig. 1. The server 14 comprises an input/output interface I/F 14a, a CPU 14b, a ROM 14c, a RAM 14d, a data storing section 14e and a user data storing section 14f. The address data and the user's captured data transmitted from the shop 12 are supplied through the interface I/F 14a to the CPU 14b, which then stores the address data and the user's captured data in the data storing section 14e and the user data storing section 14f. The data storing section 14e stores the data captured by the user 10 in association with the address, and the user data storing section 14f stores user's personal data such as a name, ID, and usage history for the user.

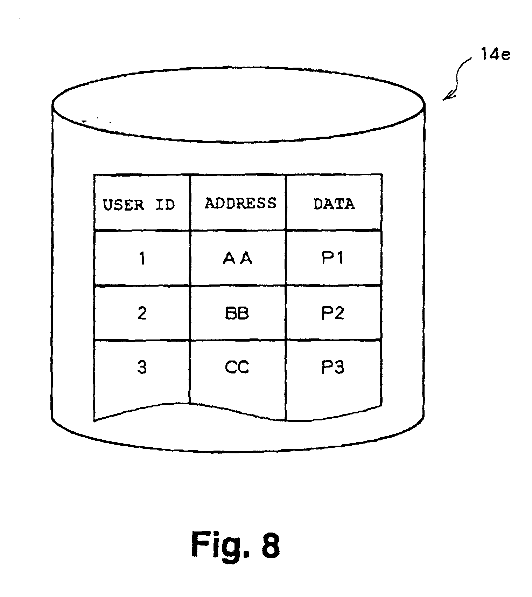

Fig. 8 schematically shows data stored in the data storing section 14e. Each user is provided with an ID and the respective users are managed collectively based on their IDs. The data captured by the user 10 is stored in association with the address assigned to each user. For example, as shown in Fig. 8, data P1 is stored in association with a user having ID 1 and address AA. When a URL is used as the address, the user's captured data can be accessed on a web page specified by this unique URL. In this case, the server 14 functions as a WWW server.

When the user 10 requests access to the server 14 via the Internet using the address provided, the CPU 14b searches for the data stored in the data storing section 14e corresponding to this address and then transmits the data to the user 10 via the Internet 16. At this time, if the address is a URL, the user 10 transmits the URL to the server 14 using a web browser installed on the user's terminal, and a web page uniquely corresponding to this URL is transmitted from the server 14 and is then displayed by the browser on the user's terminal. In this manner, the user can obtain over the Internet 16 the data he captured.

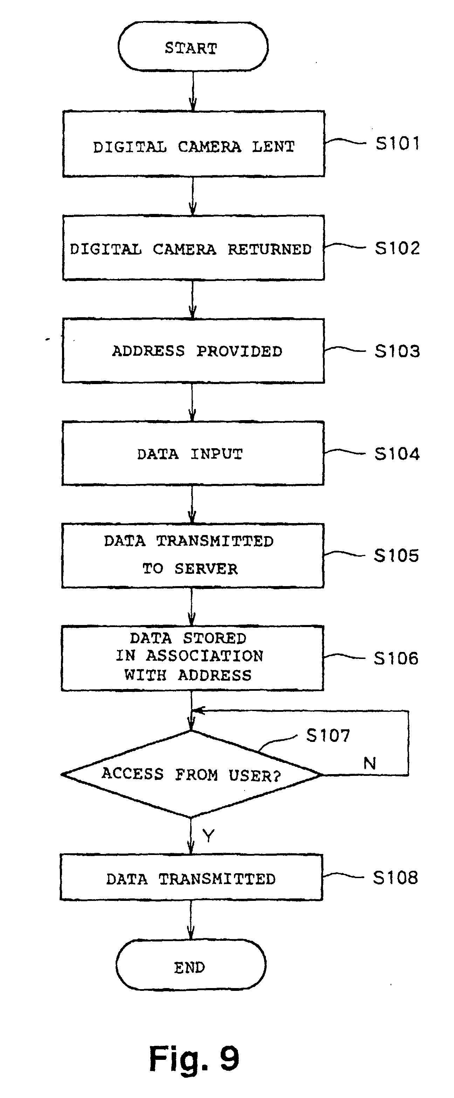

Fig. 9 is a flowchart showing the complete process operation according to the present embodiment. In this embodiment, it is assumed that the device that the user 10 borrows and returns is a digital camera 17. First, the shop 12 lends the user 10 a digital camera (S101). This lending can be charged and the rental fee may include a deposit. After capturing desired image or voice data using the digital camera 17, the user 10 returns the digital camera 17 to the shop 12 (S102). At this time, the shop may return the deposit to the user 10. Then, the shop 12 provides the user with an address (S103). As described above, the address may be a URL or an ID for obtaining the URL. For example, an ID, which is generated by adding predetermined character string to the home telephone number or the number of portable telephone of the user 10, such as 09099999999AB, is supplied to the user 10. From this ID, the shop 12 generates a URL, which is then transmitted to the server 14. The server 14 stores the ID and the URL in the user data storing section 14f. When the user 10 requests access to the data using this ID, the URL stored in the user data storing section 14f is read and transmitted to the user 10.

It is also possible to generate a URL from the ID in the server 14, rather than in the shop 12 as described above. Specifically, the ID and the data captured by the user 10 are transmitted from the shop 12 to the server 14, where a URL is generated from the ID and is stored in the user data storing section 14f. The data captured by the user 10 is also stored in the data storing section 14e in association with the URL thus generated. In this case, the ID also functions as a search key for acquiring the URL, and is therefore address data.

After the address is provided to the user 10 at step S103, the data captured by the user and the address is input (S104) and then transmitted to the server 14 (S105) from the shop 12. The server 14 stores the data transmitted from the shop 12 in association with the address (S106). It should be noted that when the server 14 is located in the shop 12, it is not necessary to transmit the data via the Internet 16, and the data can be transmitted from the data transmission section 12b and stored in the server 14 located in the shop 12.

The server 14 then determines whether or not access is requested by the user 10 (S107). If the user requests access using the address, the data stored in association with that address is transmitted to the user 10 (S108).

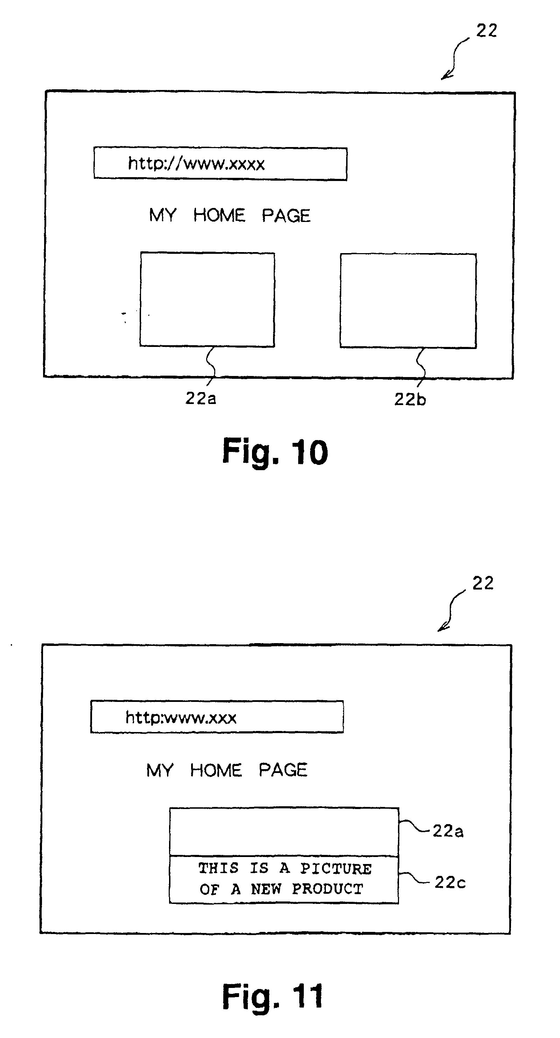

Fig. 10 shows an example of a web page transmitted to the user 10 in the following manner. Namely, the user 10 first operates a web browser installed in the user's terminal to access the server 14 using a URL as the address. The server 14 then transmits the web page in response to the user's access. Specifically, a web page 22 which is specified uniquely by the URL is transmitted from the server 14 and image data 22a, 22b which was captured by the user 10 appears on this web page 22. The image data 22a, 22b may be in BMP format, JPEG format or any other format. In this manner, the user 10 can view a web page having the image data captured by the user himself, only by capturing a desired image using the digital camera 17 borrowed from the shop 12 and then returning the digital camera 17 to the shop 12. This web page 22 is created for the user 10, and, in this sense, the server 14 can be considered as having a function of creating a web page for the user 10. The data arrangement within a web page may be predetermined by the server 14, may be specified by the user 10 when the digital camera 17 is returned, or may be specified by the user 10 when displaying the data on the web. The data regarding data arrangement specified by the user 10 is stored in the user data storing section 14f, and is read by the CPU 14b as necessary to generate a web page specific to the user 10, which can then be stored in the data storing section 14e. The display format for the web page data is not limited to that shown in Fig. 10, and may, for example, be selected in accordance with the user's request from among an album-like display, a business trip report, and other formats.

Further, because the web page 22 is stored on the server 14, the user 10 can, for example, inform a third person of the URL to enable the third person to easily view the user's web page. Thus, the user 10 can easily share the image or voice data they captured .

Further, the sever 14 can provide a bulletin board system (BBS) along with the web page so that people who access the web page of the user 10 can share their thoughts. It is also preferable that when the user 10 access the web page 22 and enters his own ID, the user 10 is allowed to edit the web page 22. By doing this, the user 10 can add comments or the like to the image data they captured.

When the user has captured both voice and image data with the digital camera 17, it is possible to convert the voice data into text data using any well-known speech recognition technique and to display the text data on the web page 22 along with the image data.

Fig. 11 shows a web page 22 produced in such a manner. Specifically, on the web page 22, the text data 22c obtained by converting the voice data captured by the user into text data is displayed below the image data 22a. It is also possible to store the voice data in correspondence with the image data, so that just the image data is visually displayed on the web page while the voice data is recreated as an audible output.

As described above, it is possible for the user 10 to easily obtain the data he captured via the Internet 16. The user 10 need only capture desired data using a device borrowed from the shop 12 and then return the device to the shop. The user 10 can easily obtain the data he captured when desired, without purchasing any additional electronic equipment and without transmitting the captured data from his own terminal via the Internet.

The present invention is not limited to the example use to illustrate the above described embodiment and various modifications may be made.

For example, although it is described above that the user 10 accesses the server 14 through the Internet 16 using a terminal, the user 10 may access the server 14 using a portable telephone or a Personal Digital Assistant (PDA). The user 10 may also access the server 14 using a digital television or a CATV connected to the Internet. In this case, as data transmitted from the server 14 is displayed on the digital television or the like, the user can easily display or share their image or other data with their family or friends.

Further, the shop 12 is not limited to a convenience store or the like, and can be located at a public facility such as a train station, an amusement park, and a specific event place such as a fair and an exhibition. When such a facility is available, a user wishing to capture image or voice data of a specific event need not obtain or bring their own digital camera, but can borrow a digital camera at the event place and obtain the captured data later via the Internet. Further, whether the shops such as convenience stores into which the system of the present invention is introduced are owned by a same company or various companies, as long as they cooperate in the present system, the user can return a digital camera 17 to a shop which is not a shop from which the user borrows the digital camera 17. The image data or the like is then stored in the server 14 and can be obtained later through the Internet.

Further, although the data captured by the user 10 is transmitted from the shop 12 to the server 14 via the Internet 16 in the foregoing embodiment, it is also possible to print the image data or store the captured data onto a recording medium such as CD, MD, and DVD at the shop 12, when requested by the user 10. It is also possible that, when the user 10 presents to the shop 12a URL or an address previously acquired, the data stored on the server 14 is downloaded to a terminal at the shop 12, such that the data can be printed or written into a recording medium such as a CD, MD, or DVD.

Also, it is possible for the user 10 to appropriately select or specify the data to be input when the data captured by the user 10 is input at the shop 12. For example, the user can operate an input device installed in the shop 12 to display and select the image data captured by the user 10 on a display screen of the input device, so that only the image data selected by the user 10 will be input to the data input device 12a. In particular, when the shop 12 is a convenience store or the like, an existing multimedia terminal can also be used as the input device. The multimedia terminal can further be used to optionally select among the display forms on the web including the display form shown in Fig. 10, an album-like display form, and a business report type display form.

Further, although the foregoing embodiment describes a digital camera 17 as an example of a device borrowed by the user 10, any other suitable device, such as a video camera, can be employed. Also, the device need not be a digital device, and an analog device may also be used. When an analog device is used, it is desirable that the analog data is converted into digital data at the shop 12 or within the server 14 before being stored on the server 14.

In the example used to illustrate the embodiment, it can be expected that the storage capacity of the sever 14 may prove insufficient when the server 14 is used by a large number of users. To limit the likelihood of such an occurrence, the data captured by the user 10 can be stored in the data storing section 14e for just a predetermined period and be automatically deleted after that period has elapsed.

Further, although information associated with the user, such as a telephone number, is given as an example for forming an address in the foregoing description of the preferred embodiment, the address is not limited to that information and may be any number or character strings as long as it can result in a unique URL for the user. In other words, if any information indicated by a number or character string is commonly used by a plurality of users, such information could not be used as an address. It is preferable to use, for example, all or a part of date, an ID number or letters regarding a shop, the receipt number in each shop or throughout the business, an identification number or characters of a country or a region, or random numbers, in combination. With regard to random numbers, however, it is necessary for the server 14 to perform centralized control so as not to assign the same number or character string to a plurality of users or tasks. Of course, a serial number or a telephone number and a surname or full name of an individual may be combined with the above information to generate an address. Further, the ID which is used as one type of address can be user's personal information such as a fingerprint or retinal pattern.

Further, although in the foregoing example of the preferred embodiment data is distributed to the user 10 via the Internet 16, the network may be a LAN or WAN, and the connection means is not limited to wired or wireless connection. When a LAN is employed and, for example, an employee of one company borrows a digital camera 17 and returns the camera after capturing image data, the image data may be stored on a server 14 of that company. Such image data can be viewed by the employee himself and others and used to facilitate a business report.

Still further, although new URL is issued and supplied to the user each time the digital camera 17 is returned in the foregoing embodiment, when the user already has an URL, new data can, at the user's request, be stored in a storing region corresponding to the user's URL. In such a case, authentication can be performed using the user's ID. It is also possible to assign a single URL to each registered user and that the data is always stored a location corresponding to that user's specific URL or ID region. To facilitate this, for example, the registered user may display an ID or membership card whenever they return a digital camera 17. With such a configuration, it is possible to display the user's URL and ID or bar code data corresponding to the URL and ID on a member card or the like and to input this information into the data input section 20a using a keyboard or a reader. Alternatively, it is also possible to prestore the URL or ID of the user on an IC card, and to input this information into the data input section 20a using a connector or an electronic circuit such as a wireless transmitting/receiving technology.

As described above, according to the present invention, a user can very easily and effectively acquire data which they have captured.

## Claims

1. A method of distributing data to a user (10) over a network (16), comprising the steps of:
inputting data stored in a device (17) returned by a user (10);
storing said data in a server computer (14) connected to said network (16) in association with an address or ID uniquely assigned to the user (10); and
transmitting said data to a terminal connected to said network (16) when the user (10) accesses said server computer (14) from the terminal using said address or ID, **characterized in that** said user assigned unique address or ID is stored in a memory (20) of said device (17).

2. A method according to claim 1, wherein said address or ID is previously provided in said device in a form which is visible to the user.

3. A method according to claim 1, wherein said address or ID is generated from information associated with the user.

4. A method according to claim 1, wherein said address or ID is a URL.

5. A method according to claim 1, wherein said data which has been input is transmitted to said server computer via said network and is stored on said server computer.

6. A method according to claim 1, wherein said terminal of the user is at least one of a computer, a portable telephone, and a digital television.

7. A method according to claim 1, wherein said data includes image data and/or voice data.

8. A method according to claim 1, wherein said device is a digital camera.

9. A system for distributing data to a user (10) via a network (16), comprising:
data input means (12a) for inputting data stored in a device (17) returned by a user (10);
storage means (14e) connected to said network (16) for storing said data in association with an address or ID uniquely assigned to the user; and
processing means (14b) for searching said data stored in said storage means (14e) in response to an access by the user using said address or ID and transmitting said data via said network (10) to a terminal employed by the user (10),
**characterized in that** said user assigned unique address or ID is stored in a memory (20) of the device (17).

10. A system according to claim 9, further comprising data transmitting means for transmitting said data input by said data input means and said address to said storing means via said network.

11. A system according to claim 9, further comprising address generating means for generating said address or ID from information associated with said user.

12. A system according to claim 9, wherein said address or ID is a URL.

13. A system according to claim 9, wherein said data is image data and/or voice data.

14. A system according to claim 9, wherein said device is a digital camera.

15. An apparatus for distributing data to a user (10) via a network (16), comprising:
means for storing (14e) data previously stored in a device (17) returned by a user (10), in association with an address or ID uniquely assigned to the user; and
means for receiving (14a) a data request using said unique address or ID and transmitting said data via said network (16) to a terminal operated the user (10), **characterized in that** said user assigned unique address or ID is stored in a memory (20) of the device (17).

16. An apparatus according to claim 15, wherein said address or ID is generated from information associated with said user.

17. An apparatus according to claim 15, wherein said address or ID is a URL and wherein data transmission means transmits said data to the terminal of said user in the form of a web page.

18. An apparatus according to claim 15, wherein said data includes image data and/or voice data.

19. An apparatus according to claim 15, wherein said device is a digital camera.

20. A method according to Claim 1, wherein said user assigned unique address or ID is stored in a root directory area in a memory of said device.

21. A system according to Claim 9 or an apparatus according to claim 15, wherein said user assigned unique address or ID is stored in a root directory area in a memory of said device.

## Patentansprüche

1. Verfahren einer Datenverteilung zu einem Nutzer (10) über ein Netzwerk (16), welches die folgenden Schritte umfasst:
Eingeben von Daten, welche in einer Vorrichtung (17) gespeichert und von einem Nutzer (10) zurückgegeben wurden;
Speichern der Daten in einem Serverrechner (14), welcher mit dem Netzwerk (16) verbunden ist, und zwar in Zuordnung zu einer dem Nutzer (10) einzigartig zugewiesenen Adresse oder lD; sowie
Übertragen der Daten zu einem mit dem Netzwerk (16) verbundenen Endgerät, wenn der Nutzer (10) von dem Endgerät aus unter Verwendung der Adresse oder ID auf den Serverrechner (14) zugreift, **dadurch gekennzeichnet, dass** die dem Nutzer zugewiesene einzigartige Adresse oder ID in einem Speicher (20) der Vorrichtung (17) gespeichert ist.

2. Verfahren nach Anspruch 1, bei welchem die Adresse oder ID zuvor in der Vorrichtung in einer für den Nutzer sichtbaren Form bereitgestellt wird.

3. Verfahren nach Anspruch 1, bei welchem die Adresse oder ID aus Information erzeugt wird, welche dem Nutzer zugeordnet ist.

4. Verfahren nach Anspruch 1, bei welchem die Adresse oder ID ein URL ist.

5. Verfahren nach Anspruch 1, bei welchem die Daten, welche eingegeben wurden, zu dem Serverrechner über das Netzwerk übertragen und auf dem Serverrechner gespeichert werden.

6. Verfahren nach Anspruch 1, bei welchem das Endgerät des Nutzers wenigstens ein Gerät aus einem Rechner, einem tragbaren Telefon und einem Digitalfernseher ist.

7. Verfahren nach Anspruch 1, bei welchem die Daten Bilddaten und/oder Sprachdaten umfassen.

8. Verfahren nach Anspruch 1, bei welchem die Vorrichtung eine Digitalkamera ist.

9. System zum Verteilen von Daten zu einem Nutzer (10) über ein Netzwerk (16), umfassend:
ein Dateneingabemittel (12a) zum Eingeben von Daten, welche in einer Vorrichtung (17) gespeichert und von einem Nutzer (10) zurückgegeben werden;
ein Speichermittel (14e), welches mit dem Netzwerk (16) verbunden ist, um die Daten in Zuordnung zu einer dem Nutzer einzigartig zugewiesenen Adresse oder ID zu speichern; sowie
ein Verarbeitungsmittel (14b) zum Suchen der in dem Speichermittel (14e) gespeicherten Daten in Antwort auf einen Zugriff durch den Nutzer unter Verwendung der Adresse oder ID und zum Übertragen der Daten über das Netzwerk (10) zu einem von dem Nutzer (10) verwendeten Endgerät,
**dadurch gekennzeichnet, dass** die dem Nutzer zugewiesene einzigartige Adresse oder ID in einem Speicher (20) der Vorrichtung (17) gespeichert ist.

10. System nach Anspruch 9, ferner umfassend ein Datenübertragungsmittel zum Übertragen der durch das Dateneingabemittel eingegebenen Daten und der Adresse zu dem Speichermittel über das Netzwerk.

11. System nach Anspruch 9, ferner umfassend ein Adresserzeugungsmittel zum Erzeugen der Adresse oder ID aus dem Nutzer zugeordneter Information.

12. System nach Anspruch 9, bei welchem die Adresse oder ID ein URL ist.

13. System nach Anspruch 9, bei welchem die Daten Bilddaten und/oder Sprachdaten sind.

14. System nach Anspruch 9, bei welchem die Vorrichtung eine Digitalkamera ist.

15. Vorrichtung zum Verteilen von Daten zu einem Nutzer (10) über ein Netzwerk (16), umfassend:
ein Mittel zum Speichern (14e) von Daten, welche zuvor in einer Vorrichtung (17) gespeichert und durch einen Nutzer (10) zurückgegeben werden, und zwar in Zuordnung zu einer dem Nutzer einzigartig zugewiesenen Adresse oder ID; sowie
ein Mittel zum Empfangen (14a) einer Datenanfrage unter Verwendung der einzigartigen Adresse oder ID und zum Übertragen der Daten über das Netzwerk (16) zu einem von dem Nutzer (10) betätigten Endgerät,
**dadurch gekennzeichnet, dass** die dem Nutzer zugewiesene einzigartige Adresse oder lD in einem Speicher (20) der Vorrichtung (17) gespeichert ist.

16. Vorrichtung nach Anspruch 15, bei welcher die Adresse oder ID aus dem Nutzer zugeordneter Information erzeugt ist,

17. Vorrichtung nach Anspruch 15, bei welcher die Adresse oder ID ein URL ist und bei welcher das Datenübertragungsmittel die Daten zu dem Endgerät des Nutzers in der Form einer Webseite überträgt.

18. Vorrichtung nach Anspruch 15, bei welcher die Daten Bilddaten und/oder Sprachdaten umfassen.

19. Vorrichtung nach Anspruch 15, bei welcher die Vorrichtung eine Digitalkamera ist.

20. Verfahren nach Anspruch 1, bei welchem die dem Nutzer zugewiesene einzigartige Adresse oder ID in einem Stammverzeichnisbereich in einem Speicher der Vorrichtung gespeichert ist.

21. System nach Anspruch 9 oder eine Vorrichtung nach Anspruch 15, bei welchem bzw. welcher die dem Nutzer zugewiesene einzigartige Adresse oder ID in einem Stammverzeichnisbereich in einem Speicher der Vorrichtung gespeichert ist.

## Revendications

1. Procédé de répartition des données à un utilisateur (10) par l'intermédiaire d'un réseau (16), comprenant les étapes consistant à :
entrer les données mémorisées dans un dispositif (17) communiquées par un utilisateur (10) ;
mémoriser lesdites données dans un ordinateur serveur (14) relié audit réseau (16) en association avec une adresse ou ID uniquement attribuée à l'utilisateur (10) ; et
transmettre lesdites données à un terminal relié audit réseau (16) lorsque l'utilisateur (10) accède audit serveur (14) depuis le terminal en utilisant ladite adresse ou ID, **caractérisé en ce que** ladite adresse ou ID unique attribuée à l'utilisateur est mémorisée dans une mémoire (20) dudit dispositif (17).

2. Procédé selon la revendication 1, dans lequel ladite adresse ou ID est prévue à l'avance dans ledit dispositif sous une forme qui est visible par l'utilisateur.

3. Procédé selon la revendication 1, dans lequel ladite adresse ou ID est générée à partir de l'information associée à l'utilisateur.

4. Procédé selon la revendication 1, dans lequel ladite adresse ou ID est une URL.

5. Procédé selon la revendication 1, dans lequel lesdites données qui ont été entrées sont transmises audit serveur par l'intermédiaire dudit réseau et sont mémorisées sur ledit serveur.

6. Procédé selon la revendication 1, dans lequel ledit terminal de l'utilisateur est au moins l'un d'un ordinateur, d'un téléphone portable, et d'une télévision numérique.

7. Procédé selon la revendication 1, dans lequel lesdites données comprennent des données d'image et/ou des données vocales.

8. Procédé selon la revendication 1, dans lequel ledit dispositif est une caméra numérique.

9. Système de répartition des données à un utilisateur (10) par l'intermédiaire d'un réseau (16), comprenant :
des moyens d'entrée de données (12a) pour entrer des données mémorisées dans un dispositif (17) communiquées par un utilisateur (10) ;
des moyens de mémorisation (14e) reliés audit réseau (16) pour mémoriser lesdites données en association avec une adresse ou ID uniquement attribuée à l'utilisateur; et
des moyens de traitement (14b) pour chercher lesdites données mémorisées dans lesdits moyens de mémorisation (14e) en réponse à un accès par l'utilisateur en utilisant ladite adresse ou ID et transmettre lesdites données par l'intermédiaire dudit réseau (10) à un terminal utilisé par l'utilisateur (10),
**caractérisé en ce que** ladite adresse ou ID unique attribuée à l'utilisateur est mémorisée dans une mémoire (20) du dispositif (17).

10. Système selon la revendication 9, comportant en outre des moyens de transmission de données pour transmettre lesdites données entrées par lesdits moyens d'entrée de données et ladite adresse auxdits moyens de mémorisation par l'intermédiaire dudit réseau.

11. Système selon la revendication 9, comportant en outre des moyens de génération d'adresse pour générer ladite adresse ou ID à partir de l'information associée audit utilisateur.

12. Système selon la revendication 9, dans lequel ladite adresse ou ID est une URL.

13. Système selon la revendication 9, dans lequel lesdites données sont des données d'image et/ou des données vocales.

14. Système selon la revendication 9, dans lequel ledit dispositif est une caméra numérique.

15. Appareil de répartition des données à un utilisateur (10) par l'intermédiaire d'un réseau (16), comportant :
des moyens pour mémoriser (14e) des données mémorisées précédemment dans un dispositif (17) communiquées par un utilisateur (10), en association avec une adresse ou ID uniquement attribuée à l'utilisateur ; et
des moyens pour recevoir (14a) une requête de données en utilisant ladite adresse ou ID unique et transmettre lesdites données par l'intermédiaire dudit réseau (16) à un terminal actionné par l'utilisateur (10), **caractérisé en ce que** ladite adresse ou ID unique attribuée à l'utilisateur est mémorisée dans une mémoire (20) d'un dispositif (17).

16. Appareil selon la revendication 15, dans lequel ladite adresse ou ID est générée à partir de l'information associée audit utilisateur.

17. Appareil selon la revendication 15, dans lequel ladite adresse ou ID est une URL et dans lequel lesdits moyens de transmission de données transmettent lesdites données au terminal dudit utilisateur sous la forme d'une page web.

18. Appareil selon la revendication 15, dans lequel lesdites données comprennent des données d'image et/ou des données vocales.

19. Appareil selon la revendication 15, dans lequel ledit dispositif est une caméra numérique.

20. Procédé selon la revendication 1, dans lequel ladite adresse ou ID unique attribuée à l'utilisateur est mémorisée dans une zone de répertoire principal dans une mémoire dudit dispositif.

21. Système selon la revendication 9 ou appareil selon la revendication 15, dans lequel ladite adresse ou ID unique attribuée à l'utilisateur est mémorisée dans une zone de répertoire principal dans une mémoire dudit dispositif.
